Europäisches Patentamt

European Patent Office

Office européen des brevets

(19)

(11) Publication number : **0 033 711**
**B1**

# (12) EUROPEAN PATENT SPECIFICATION

(45) Date of publication of patent specification :
21.03.84

(51) Int. Cl.³ : **B 32 B 25/10, G 10 K 11/16**

(21) Application number : 81630013.1

(22) Date of filing : 02.02.81

(54) Sound barrier material.

(30) Priority : 04.02.80 US 118039

(43) Date of publication of application :
12.08.81 Bulletin 81/32

(45) Publication of the grant of the patent :
21.03.84 Bulletin 84/12

(84) Designated contracting states :
DE FR GB

(56) References cited :
EP-A- 0 000 873
DE-A- 2 414 415
DE-A- 2 751 854
GB-A- 1 471 889
US-A- 3 253 947

(73) Proprietor : THE GOODYEAR TIRE & RUBBER
COMPANY
1144 East Market Street
Akron, Ohio 44316 (US)

(72) Inventor : Oliveira, Paul Edward
215 Hawthorn Street
New Bedford Massachusetts 02740 (US)

(74) Representative : Weyland, Joseph Jean Pierre
Goodyear International Tire Technical Center Patent
Department Avenue Gordon Smith
L-7750 Colmar-Berg (LU)

**0 033 711**

Sound barrier material
Technical Field

This invention relates to a relatively dimensionally stable, acoustical and safety barrier laminate. More particularly this invention relates to a roadway barrier laminate to reduce noise transmission and provides a safety barrier.

Background Art

Railways, roadways, etc., have high noise transmission levels and consequently these high noise levels can be harmful to occupants of said area and thus reduce the comfort of being in these areas. It has been desirable to provide such areas with lightweight, flexible, sound absorbent or transmission loss barriers to lower the noise level but heretofore these barriers have been expensive and unsightly. The document EP-A-0 000 873 indicates the recent developments in this field of sound deading.

The Invention

The object of this invention is to provide an improved sound absorbent and transmission loss barrier laminate capable of effectively reducing the noise level in these ways.

The noise abatement barrier laminates of this invention can be formed into any shape but preferably are supplied as a flexible laminate which can be readily cut and attached to a post or support member to forestall noise transmission into or through an area near the way. Usually the laminate is 0.12 to 8.13 centimeters thick and can be hung or attached to two or more supports to form the desired sound and safety barrier along the way.

Best Mode for Carrying Out the Invention

The specific nature of this invention and its advantages can be more readily appreciated by reference to the following example wherein all parts and percentages are by weight unless otherwise designated.

Example 1

A nonflammable mesh sheet material of .30 to 4.88 kilograms per square meter was coated with a plasticized vinyl chloride resin to give a mesh base sheet having preferably a width of about 30.48 centimeters or more. This mesh base sheet was passed through calender rolls to apply to each side thereof a predetermined amount of coating having a composition according to Table 1. The specific gravity of the composition is in the range of 1.50 to 2.25.

Table I

| Ingredient | Parts by Weight |
|---|---|
| Chlorinated polyethylene* | 100 |
| Barium sulfate | 50-200 |
| Plasticizer | 5-50 |
| Titanium dioxide | 25-10 |
| Stabilizer | 1-15 |
| Carbon black | 1-100 |

* 36 to 48 % $Cl_2$

The above ingredients were mixed in a conventional rubber or plastic mixer to give a mixture of uniform texture that can be applied on the calender to the mesh sheet material.

Two polyvinyl chloride coated mesh base sheets, each having a further coating on each face thereof of the composition according to Table I 0.05 to 7.7 centimeters thick, have laminated therebetween a wire mesh sheet or other foraminous metallic member. The two base sheets are placed in contact with the wire mesh sheet therebetween, at elevated temperature and pressure in a plate press, press rolls or related pressure-temperature means.

A laminate made as described comprises a foraminous metallic member between two polyvinyl chloride coated nonflammable mesh sheets having a predeterminated thickness of coating of the composition according to Table I.

Preferably the barrier laminate is nonflammable and in these cases glass fibres is the preferred material for the mesh sheet material.

Since chlorinated polyethylene and polyvinyl chloride can degrade by generation of HCl it is desirable that they be stabilized with suitable stabilizers such as epichlorohydrin-bisphenol-A resin or the

2

compounds viz. litharge, tin and barium compounds, used to stabilize polyvinyl chloride and chlorinated polyethylene rubbers.

Any of the plasticizers for polyvinyl chloride or chlorinated polyethylene can be used in this invention but chlorinated paraffin wax, 10 to 35 percent chloride, is preferred.

## Claims

1. A sound and safety barrier laminate comprising a sheet member sandwiched between two polyvinyl chloride coated mesh base sheets, said base sheets each having a further coating on each face thereof of a barium sulfate loaded chlorinated polyethylene, characterized in that said sheet member is a metallic foraminous member and each said further coating is between 0.05 to 7.7 cm thick.

2. The sound barrier laminate as claimed in Claim 1, characterized in that in each further coating there are 50 to 200 parts by weight of barium sulfate present in each 100 parts of chlorinated polyethylene and said chlorinated polyethylene contains from 36 to 48 percent by weight of chlorine.

3. The sound barrier laminate as claimed in Claim 1 or Claim 2, characterized in that each further coating of said laminate is stabilized with epichlorohydrin-bisphenol-A resin and contains a plasticizer comprising chlorinated paraffin wax.

4. The sound barrier laminate as claimed in anyone of Claims 1 to 3, characterized in that the metallic foraminous member is a wire mesh sheet.

5. The sound barrier laminate as claimed in anyone of Claims 1 to 4, characterized in that each mesh base sheet consists of glass fibres.

## Ansprüche

1. Schall- und Sicherheitsbarrierelaminat aus einem Bahnelement, das sandwichartig zwischen zwei Polyvinylchlorid-beschichteten Maschengrundbahnen vorliegt, wobei die Grundbahnen jeweils einen weiteren Überzug auf jeder Fläche aus einem mit Bariumsulfat gefüllten chlorierten Polyethylen aufweisen, dadurch gekennzeichnet, daß das Bahnelement ein metallisches mit Öffnungen versehenes Element ist und jeder weitere Überzug eine Dikke zwischen 0,05 und 7,7 cm besitzt.

2. Laminat nach Anspruch 1, dadurch gekennzeichnet, daß in jedem weiteren Überzug 50 bis 200 Gew.-Teile Bariumsulfat in jeweils 100 Teilen chloriertem Polyethylen vorliegen und das chlorierte Polyethylen 36 bis 48 Gew.-% Chlor enthält.

3. Laminat nach Anspruch 1 oder 2, dadurch gekennzeichnet, daß jeder weitere Überzug des Laminats mit einem Epichlorhydrin-Bisphenol A-Harz stabilisiert ist und einen Weichmacher aus einem chlorierten Paraffinwachs enthält.

4. Laminat nach einem der Ansprüche 1 bis 3, dadurch gekennzeichnet, daß das metallische mit Löchern versehene Element eine Drahtmaschenbahn ist.

5. Laminat nach einem der Ansprüche 1 bis 4, dadurch gekennzeichnet, daß jede Maschengrundbahn aus Glasfasern besteht.

## Revendications

1. Lamifié pour barrières d'insonorisation et de sécurité comprenant un organe en feuille intercalé entre deux feuilles de base à mailles enduites de chlorure de polyvinyle, ces feuilles de base comportant chacune, sur chaque face, un revêtement supplémentaire d'un polyéthylène chloré à charge de sulfate de baryum, caractérisé en ce que l'organe en feuille est un organe métallique percé de trous, tandis que chaque revêtement supplémentaire a une épaisseur se situant entre 0,05 et 7,7 cm.

2. Lamifié pour barrières d'insonorisation suivant la revendication 1, caractérisé en ce que chaque vêtement supplémentaire contient 50 à 200 parties en poids de sulfate de baryum par 100 parties de polyéthylène chloré, ce dernier contenant 36 à 48 % en poids de chlore.

3. Lamifié pour barrières d'insonorisation suivant la revendication 1 ou 2, caractérisé en ce que chaque revêtement supplémentaire de ce lamifié est stabilisé avec une résine d'épichlorhydrine/bisphénol A et contient un plastifiant constitué d'une cire de paraffine chlorée.

4. Lamifié pour barrières d'insonorisation suivant l'une quelconque des revendications 1 à 3, caractérisé en ce que l'organe métallique percé de trous est un treillis métallique.

5. Lamifié pour barrières d'insonorisation suivant l'une quelconque des revendications 1 à 4, caractérisé en ce que chaque feuille de base à mailles est constituée de fibres de verre.